# EUROPÄISCHE PATENTSCHRIFT

(11) **EP 2 053 709 B1**
(45) Veröffentlichungstag und Bekanntmachung des Hinweises auf die Patenterteilung: **01.08.2012**
(21) Anmeldenummer: 07020609.9
(22) Anmeldetag: 22.10.2007
(51) Int. Cl.: H01S 3/02, H01S 3/042

(54) **Lager für optische Bauteile**
Mount for optical components
Support pour composants optiques

(43) Veröffentlichungstag der Anmeldung: 29.04.2009
(73) Patentinhaber: TRUMPF Laser GmbH + Co. KG, 78713 Schramberg (DE)
(72) Erfinder: Huonker, Martin, Dipl.-Ing., 78661 Dietingen (DE); Killi, Alexander, Dr. rer. nat., 78647 Trossinger (DE)
(74) Vertreter: Kohler Schmid Möbus

(56) Entgegenhaltungen:
- EP-A- 0 801 449
- EP-A- 1 178 579
- WO-A2-2004/032247
- DE-A1- 2 718 401
- DE-A1- 2 846 558
- DE-A1- 4 343 127
- DE-A1- 10 328 305
- DE-A1- 19 643 531
- JP-A- 5 110 203
- JP-A- 61 181 176
- US-A- 5 543 729
- US-A1- 2004 052 283
- US-A1- 2006 114 961
- US-B1- 6 658 036
- H.R. VERDUN ET AL.: 'Efficient TEM00-mode operation of a Nd:YAG laser end pumped by a three-bar high-power diode-laser array' OPTICS LETTERS USA Bd. 17, Nr. 14, Seiten 1000 - 1002 ISSN: 0146-9592

## Beschreibung

Die vorliegende Erfindung betrifft ein Lager mit einer sich an ein aufliegendes Bauteil anschmiegenden verformbaren Lagerschicht.

Die Lagerung von optisch aktiven und passiven Bauteilen, insbesondere von Kristallen, die als laseraktive Medien oder Frequenzverdoppler dienen, oder Spiegeln, stellt häufig ein Problem dar: Das betreffende Bauteil muss einerseits mechanisch stabil gefasst, andererseits aber so elastisch gelagert sein, dass die im Betrieb auftretende Temperaturerhöhung keine Verspannung des Bauteils und/oder des Lagers und/oder weiterer umgebender Komponenten, wie der Bauteilaufnahme, aufgrund der - insbesondere zum Material der Bauteilaufnahme (üblicherweise Metall) - deutlich unterschiedlichen thermischen Ausdehnung hervorruft. Auch wird von einer derartigen Lagerung in der Regel auch ein geringer thermischer Übergangswiderstand gefordert, um eine bestmögliche Wärmeabfuhr von dem durch den Laserbetrieb aufgeheizten Bauteil zu bewerkstelligen.

Aufgrund der Härte der optisch aktiven oder passiven Bauteile und auch des für den Grundkörper des Lagers verwendeten Werkstoffs (zumeist Kupfer auf Grund der hohen Wärmeleitung) ist auch bei sehr guter Oberflächenbearbeitung sowohl des Grundkörpers als auch der Kristallfläche kein absolut flächiger Kontakt zwischen Kristall und Grundkörper zu erwarten, so dass auch der Wärmeübergang in der Regel nicht optimal gewährleistet ist.

Dokument DE 103 28 305 A1 offenbart eine opto-elektronische Anordnung bei der opto-elektronische Bauelemente mittels einer Indium-Folie gelagert werden.

Eine bekannte Maßnahme, diese Probleme zu beheben, besteht darin, zwischen Grundkörper und Kristall eine Folie aus einem weichen, gut wärmeleitenden Werkstoff zu legen, die sich den beiden anliegenden Oberflächen anpasst und auch die unterschiedlichen thermischen Ausdehnungen von Kristall und Grundkörper entweder elastisch oder plastisch auszugleichen vermag. Vorzugsweise kommt zu diesem Zweck eine Folie aus Indium zum Einsatz; dieser Werkstoff hat jedoch den Nachteil, dass er einen relativ geringen Schmelzpunkt aufweist und unter der Einwirkung von Druck und Temperatur leicht fließt, so dass die maximal erträgliche Temperatur einer solchen Anordnung sehr begrenzt ist. Ferner hat Indium die Eigenschaft, Licht in den in Frage kommenden Wellenlängenbereichen relativ stark zu absorbieren, was eine zusätzliche Erwärmung hervorruft, die wiederum die Einsetzbarkeit von Indium bei höheren Leistungen herabsetzt. Überdies besteht die Gefahr, dass das Indium im Laufe der Zeit um den Kristall herum in den Strahlengang fließt, wo es verdampfen und in der Folge andere optische Bauteile schädigen kann. Insbesondere hat der Einsatz von solchen Folien auch den Nachteil, dass durch die flächige Anbindung Ausgleichsbewegungen insbesondere in x- und y-Richtung weitestgehend unterbunden werden.

Die Aufgabe der vorliegenden Erfindung besteht darin, bei einem Lager der eingangs genannten Art eine zu der bekannten Indiumfolie alternative Ausführungsform für die verformbare Lagerschicht anzugeben, welche die zwischen dem Grundkörper des Lagers und dem darauf gelagerten Bauteil auftretenden Spannungen auszugleichen vermag.

Diese Aufgabe wird gemäß Anspruch 1 dadurch gelöst, dass die verformbare Lagerschicht durch ein oder mehrere verformbare Auflageelemente gebildet ist, die zumindest vor der erstmaligen Auflage eines Bauteils eine in einer oder mehreren Richtungen nicht durchgängige Auflagefläche für das Bauteil ausbilden. Weitere Ausgestaltungen des Lagervorrichtung sind den abhängigen Ansprüchen 2-9 zu entnehmen.

Die verformbaren Auflageelemente können in Form von Draht-, Streifen- oder Wellenbereichen geometrisch bestimmt oder aber auch in Form von Draht- oder Streifenknäueln (Metalldrahtwolle) sowie Granulat o.ä. geometrisch unbestimmt ausgebildet sein. Da insbesondere die nicht durchgängige Auflagefläche vor der erstmaligen Auflage des Bauteils erfindungswesentlich ist, kann die verformbare Lagerschicht an ihrer der Auflagefläche abgewandten Seite durchgängig ausgebildet sein. Die verformbaren Auflageelemente werden somit durch einen durchgängigen Bereich mit darauf - bspw. durch Strukturieren - aufgebrachten Formkörpern gebildet. Hieraus ergibt sich eine unbegrenzte Zahl an Gestaltungsmöglichkeiten der Auflagepunkte, wie z.B. Kugelsegmente oder Kegelspitzen.

Durch unterschiedliche Gestaltung der Auflagepunkte der nicht durchgängigen Auflagefläche, insbesondere durch Größe und/oder Beabstandung der Auflagepunkte sowie durch Verwendung unterschiedlicher Materialien, kann der Wärmeabfluss gezielt gesteuert werden. Dies ist insbesondere bei zu erwartender ungleicher Wärmebelastung von Vorteil.

Das erfindungsgemäße Lager hat den wesentlichen Vorteil, dass die Positionierung des Bauteils unter plastischer Verformung der Auflageelemente erfolgen kann und dann die im Betrieb z.B. aufgrund unterschiedlicher thermischer Ausdehnungen auftretenden Spannungen zwischen Lager und Bauteil dann über eine elastische Verformung der Auflageelemente ausgeglichen bzw. verhindert werden können. Die Kombination der Materialeigenschaften und der gegenständlichen Ausgestaltung der verformbaren Auflageelemente bestimmt die Gesamtsteifigkeit des Lagers.

Bevorzugt sind die verformbaren Auflageelemente aus einem Metall mit höherem Schmelzpunkt als Indium, also z.B. aus Gold, Silber, Kupfer oder Aluminium, so dass höhere Betriebstemperaturen als mit der bekannten Indiumfolie möglich sind. Der Einsatz von Indium ist aber bei geringerer thermischer Belastung nach wie vor denkbar.

In einer besonders bevorzugten Ausführungsform der Erfindung ist die verformbare Lagerschicht durch mindestens eine Drahtlage von parallelen Drähten, insbesondere von Bonddrähten gebildet, die wie Saiten über einen Grundkörper gespannt sind. Im Falle von zwei Drahtlagen können diese entweder separate Drahtlagen sein oder zu einem Geflecht ineinander geflochten sein. Bei der Montage wird das zu lagernde Bauteil in die Drahtlage gepresst, wobei sich die einzelnen Drähte elastisch und ggf. wegen hoher Punktlasten plastisch verformen und somit einen mechanischen Ausgleich ermöglichen können.

In anderen besonders bevorzugten Ausführungsformen der Erfindung ist die verformbare Lagerschicht durch eine bürstenartige Struktur aus hochstehenden Drahtelementen, wie z.B. Bonddrahtschlaufen oder Bonddrahtborsten, oder aus parallelen Metallstreifen, Metallstreifenschlaufen oder -wellen gebildet. Auch bei diesen Ausführungsformen bewirkt der bei der Montage auf die bürstenartige Struktur ausgeübte Druck, dass sich die hochstehenden Drahtelemente an die Unebenheiten bzw. die Oberfläche des zu montierenden Bauteils durch Verformung anpassen und so für einen mechanischen Ausgleich und eine optimale thermische Anbindung sorgen können.

In einer weiteren besonders bevorzugten Ausführungsform der Erfindung ist die verformbare Lagerschicht durch eine Wellenfolie gebildet, deren die Auflagerfläche ausbildenden Wellenbereiche sich an die Unebenheiten bzw. die Oberfläche des zu montierenden Bauteils anpassen und so für einen mechanischen Ausgleich und eine optimale thermische Anbindung sorgen.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform des erfindungsgemäßen Lagers mit einer verformbaren Lagerschicht in Form einer Drahtlage aus Bonddrähten;
- Fig. 2: eine zweite Ausführungsform des erfindungsgemäßen Lagers mit einer verformbaren Lagerschicht in Form von zwei separaten Drahtlagen aus Bonddrähten;
- Fig. 3: eine dritte Ausführungsform des erfindungsgemäßen Lagers mit einer verformbaren Lagerschicht in Form von zwei miteinander verflochtenen Drahtlagen aus Bonddrähten;
- Fig. 4: eine vierte Ausführungsform des erfindungsgemäßen Lagers mit einer verformbaren Lagerschicht in Form einer bürstenartigen Struktur aus Bonddrahtschlaufen;
- Fig. 5: eine vergrößerte Ansicht der bürstenartigen Struktur gemäß dem Detail V in Fig. 4; und
- Fign. 6a-6f: weitere Ausführungsformen des erfindungsgemäßen Lagers mit einer verformbaren Lagerschicht in Form einer bürstenartigen Struktur aus einzelnen Bonddrahtborsten (Fig. 6a) oder aus parallelen Metallstreifen (Fig. 6b), in Form einer Wellenfolie (Fig. 6c) sowie in Form von Bandmaterial (Fig. 6d), von Metalldrahtwolle (Fig. 6e) oder Granulat (Fig. 6f), jeweils in einer Detailansicht analog zu Fig. 5.

Die in den Figuren gezeigten Lager dienen zur elastischen Lagerung und zur Kühlung von optisch aktiven Bauteilen, wie z.B. Kristallen, die mechanisch stabil gelagert sein müssen und eine gute thermische Anbindung an das Lager benötigen.

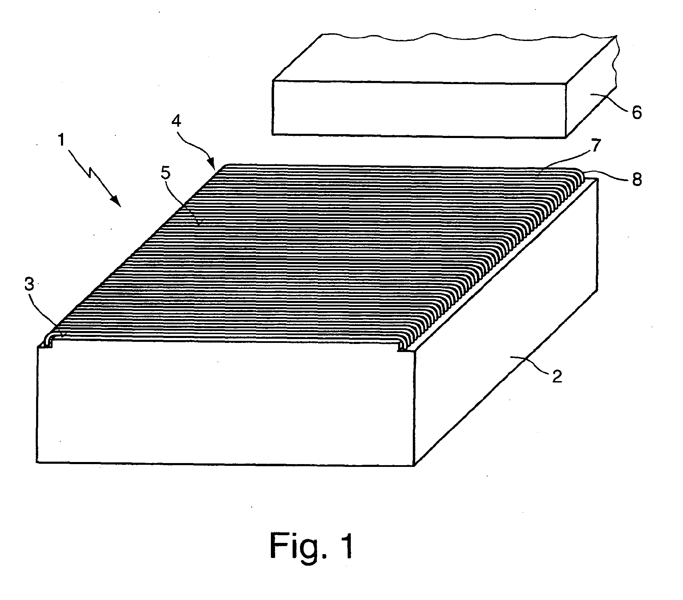

Das in **Fig. 1** gezeigte Lager **1** umfasst einen Grundkörper **2** aus Kupfer mit einer ebenen Grundfläche **3** und eine darauf vorgesehene verformbare Lagerschicht **4,** deren dem Grundkörper 2 abgewandte Außenseite eine sich an die ebene Unterseite eines aufliegenden Bauteils **6** anschmiegende Auflagerfläche **5** ausbildet. Die verformbare Lagerschicht 4 ist durch eine Drahtlage **7** aus parallelen Bonddrähten **8** gebildet, die einzeln über die ganze Grundfläche 3 gespannt sind, d.h. auf der Grundfläche 3 aufliegen, und eine relativ glatte geschlossene Oberfläche ausbilden. Die Dicke der verformbaren Lagerschicht 4 entspricht etwa der Bonddrahtstärke von ca. 10 µm bis ca. 100 µm.

Die Herstellung der Bonddrähte 8 erfolgt mit einer handelsüblichen Bonddrahtmaschine, die z.B. Gold-, Silber-, Kupfer- oder Aluminiumdrähte im Dickenbereich zwischen 10 µm und 100 µm mittels Druck- und Ultraschall verschweißen kann. Die Enden der Bonddrähte 8 sind an die vergoldete oder versilberte Grundfläche 3 angeschweißt, wobei die Bondverbindung von Bonddraht 8 und Grundkörper 2 tiefer angeordnet ist als die eigentliche Grundfläche 3, um zu vermeiden, dass die Verbindungsbereiche als Unebenheit den flächigen Kontakt zwischen der Drahtlagenaußenseite und dem aufliegenden Bauteil 6 stören.

Vor der erstmaligen Auflage des Bauteils 6 bildet die Drahtlage 7 eine in Richtung quer zu den Bonddrähten 8 nicht durchgängige Auflagerfläche 5 für das Bauteil 6 aus. Bei der Montage wird das zu lagernde Bauteil 6 in die Drahtlage 7 eingepasst oder auch gepresst, wodurch sich die einzelnen Bonddrähte 8 wegen der hohen Punktlast plastisch - verformen und sich mit ihren Drahtaußenseiten an das aufliegende Bauteil 6 anschmiegen können. Da es sich um einzelne Bonddrähte 8 und um keine flächige Lagerung handelt, können die einzelnen Bonddrähte 8 aufgrund der wirkenden Punktlast auch bei Unebenheiten direkt am Bauteil 6 angreifen. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht. Vorzugsweise weist das Bonddrahtmaterial eine geringere Härte als das Bauteil 6 auf, um zu gewährleisten, dass sich zunächst die Bonddrähte 8, ggf. plastisch, verformen, bevor es zu großen Spannungsspitzen am gelagerten Bauteil 6 kommt. Die Positionierung des Bauteils 6 erfolgt unter plastischer Verformung der Bonddrähte 8, während Spannungen zwischen dem Lager 1 und dem gelagerten, d.h. positionierten Bauteil 6 aufgrund thermischer Ausdehnungen dann über eine elastische Verformung der Bonddrähte 8 ausgeglichen bzw. verhindert werden können.

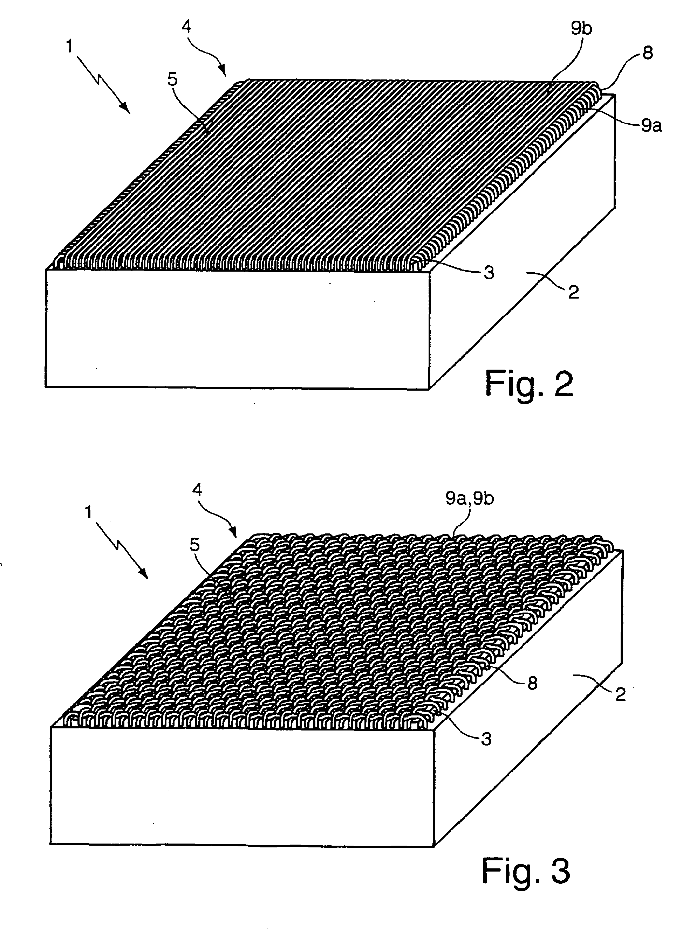

Bei dem in **Fig. 2** gezeigten Lager 1 ist die verformbare Lagerschicht 4 durch zwei Drahtlagen **9a, 9b** aus parallelen Bonddrähten 8 gebildet, deren Enden an die Grundfläche 3 gebondet sind. Die untere Drahtlage 9a ist über die ganze Grundfläche 3 und die obere Drahtlage 9b über die untere Drahtlage 9a gespannt, d.h., die untere Drahtlage 9a liegt auf der Grundfläche 3 und die obere Drahtlage 9b auf der unteren Drahtlage 9a auf. Die Bonddrähte 8 der unteren und der oberen Drahtlage 9a, 9b verlaufen dabei rechtwinklig zueinander. Die Dicke der verformbaren Lagerschicht 4 entspricht etwa der doppelten Bonddrahtstärke. Vor der erstmaligen Auflage des Bauteils 6 bildet die obere Drahtlage 9b eine in Richtung quer zu ihren Bonddrähten 8 nicht durchgängige Auflagerfläche 5 für das Bauteil 6 aus. Bei der Montage wird das zu lagernde Bauteil 6 in die obere Drahtlage 9b gepresst, wodurch sich die Bonddrähte 8 der beiden Drahtlagen 9a, 9b wegen der hohen Punktlast plastisch verformen und sich die Bonddrähte 8 der oberen Drahtlage 9b an das aufliegende Bauteil 6 anschmiegen können. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht.

Vom Lager der Fig. 2 unterscheidet sich das in **Fig. 3** gezeigte Lager 1 dadurch, dass die zwei Drahtlagen 9a, 9b miteinander zu einem auf der Grundfläche 3 aufliegenden Geflecht verflochten sind. Dieses Drahtgeflecht bildet die verformbare Lagerschicht 4, deren Dicke etwa der doppelten Bonddrahtstärke entspricht. Vor der erstmaligen Auflage des Bauteils 6 bildet das Drahtgeflecht eine allseitig nicht durchgängige Auflagerfläche 5 für das Bauteil 6 aus. Bei der Montage wird das zu lagernde Bauteil 6 in das Drahtgeflecht gepresst, wobei sich die Bonddrähte 8 wegen der hohen Punktlast plastisch verformen und sich mit ihren Drahtaußenseiten an das aufliegende Bauteil 6 anschmiegen können. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht.

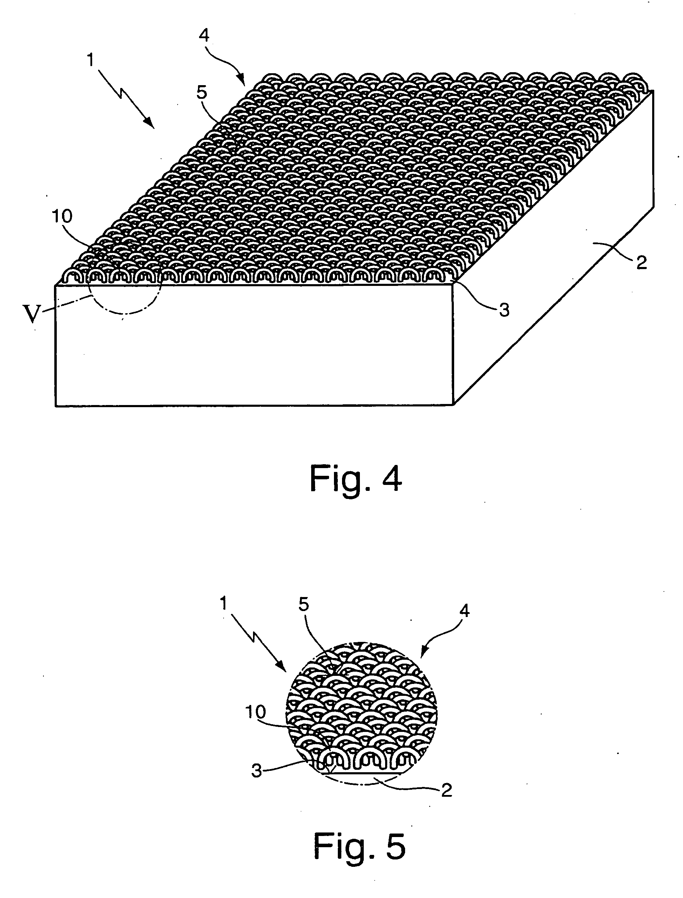

Bei dem in **Fign. 4 und 5** gezeigten Lager 1 ist die verformbare Lagerschicht 4 durch eine bürstenartige Struktur aus ca. 1 mm hochstehenden Bonddrahtschlaufen **10** gebildet, mit denen die Grundfläche 3 flächendeckend versehen ist. Die Bonddrahtschlaufen 10, die aus Bonddraht aus Gold, Kupfer, Silber oder Aluminium mit einer Dicke zwischen ca. 10 µm und ca. 100 µm gebildet sind, sind jeweils an ihren beiden Enden an der vergoldeten oder versilberten Grundfläche 3 gebondet. Die Bonddrahtschlaufen 10 sind in mehreren Reihen angeordnet, und zwar jeweils mit gleicher Schlaufenausrichtung und mit einem gegenseitigen Abstand bis ca. 1 mm. Um eine möglichst homogene Auflagerfläche 5 zu erreichen, sind die Drahtschlaufen 10 zweier benachbarter Reihen jeweils um eine halbe Schlaufenbreite zueinander versetzt angeordnet. Vor der erstmaligen Auflage des Bauteils 6 bilden die Bonddrahtschlaufen 10 eine allseitig nicht durchgängige Auflagerfläche 5 für das Bauteil 6 aus. Bei der Montage wird das zu lagernde Bauteil 6 in die Bürstenstruktur gepresst, wodurch sich die Bonddrahtschlaufen 10 wegen der hohen Punktlast plastisch verformen und an das aufliegende Bauteil 6 anschmiegen können. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht. Die Positionierung des Bauteils 6 erfolgt unter ggf. plastischer Verformung der Bonddrahtschlaufen 10, während Spannungen zwischen dem Lager 1 und dem gelagerten, d.h. positionierten Bauteil 6 aufgrund thermischer Ausdehnungen dann über eine elastische Verformung der Bonddrahtschlaufen 10 ausgeglichen bzw. verhindert werden können.

Genauer gesagt bewirkt der bei der Montage ausgeübte Druck auf die Bonddrahtschlaufen 10, dass sich diese durch Angriff an Ungenauigkeiten zwischen Bauteil 6 und Grundfläche 3 anpassen und so für eine optimale thermische Anbindung sorgen. Da es sich um einzelne Drähte und um keine flächige Lagerung handelt, ist somit auch die Möglichkeit gegeben, dass die einzelnen Drähte aufgrund der hohen Punktlast in Unebenheiten angreifen und so einen Spaltausgleich herstellen. Vorzugsweise weist das Bonddrahtmaterial eine geringere Härte als das Bauteil 6 auf, um zu gewährleisten, dass sich zunächst die Bonddrahtschlaufen 10 plastisch verformen, bevor es zu großen Spannungsspitzen am gelagerten Bauteil 6 kommt.

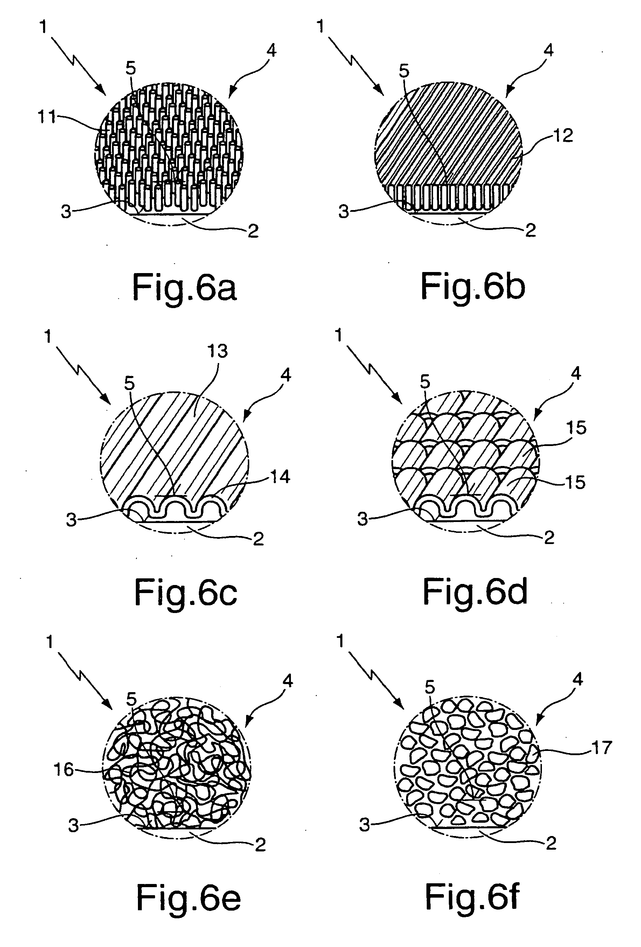

Vom Lager der Fig. 5 unterscheidet sich das in **Fig. 6a** gezeigte Lager 1 lediglich dadurch, dass hier die verformbare Lagerschicht 4 durch eine bürstenartige Struktur aus ca. 1 mm hochstehenden einzelnen Drähten (Bonddrahtborsten) **11** gebildet ist, mit denen die Grundfläche 3 flächendeckend versehen ist. Die Drähte 11 sind an ihrem einen Drahtende an der Grundfläche 3 gebondet.

Die in den Fign. 1 bis 6a verwendeten Bonddrähte können massiv oder auch hohl ausgeführt sein, wobei im letzteren Fall das E-Modul reduziert ist. Zudem können unterschiedliche Drahtquerschnitte, wie rund, elliptisch, eckig, etc., eingesetzt werden.

Bei dem in **Fig. 6b** gezeigten Lager 1 ist die verformbare Lagerschicht 4 durch eine bürstenartige Struktur aus ca. 1 mm hochstehenden parallelen Metallstreifen 12 aus z.B. Kupfer gebildet, mit denen die Grundfläche 3 flächendeckend versehen ist. Die Metallstreifen 12 haben eine Dicke zwischen ca. 10 µm und ca. 100 µm und liegen jeweils aneinander an. Vor der erstmaligen Auflage des Bauteils 6 bildet die Metallstreifen 12 eine in ihrer Querrichtung nicht durchgängige Auflagerfläche 5 für das Bauteil 6 aus. Bei der Montage wird das zu lagernde Bauteil 6 in die Bürstenstruktur gepresst, wodurch sich die Metallstreifen 12 wegen der hohen Punktlast plastisch verformen und an das aufliegende Bauteil 6 anschmiegen können. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht. Die Positionierung des Bauteils 6 erfolgt unter plastischer Verformung der Metallstreifen 12, während Spannungen zwischen dem Lager 1 und dem gelagerten, d.h. positionierten Bauteil 6 aufgrund thermischer Ausdehnungen dann über eine elastische Verformung der Metallstreifen 12 ausgeglichen bzw. verhindert werden können.

Bei dem in **Fig. 6c** gezeigten Lager 1 ist die verformbare Lagerschicht 4 durch eine auf der Grundfläche 3 befestigte Wellenfolie **13** gebildet, deren die Auflagerfläche 5 ausbildenden Wellenbereiche **14** mit möglicht geringem gegenseitigem Abstand von ca. 1 mm angeordnet sind. Vor der erstmaligen Auflage des Bauteils 6 bilden die Wellenbereiche 14 eine in ihrer Querrichtung nicht durchgängige Auflagerfläche 5 für das Bauteil 6 aus. Bei der Montage wird das zu lagernde Bauteil 6 in die Wellenfolie 13 gepresst, wodurch sich die Wellenbereiche 14 wegen der hohen Punktlast plastisch verformen und an das aufliegende Bauteil 6 anschmiegen können. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht. Die Positionierung des Bauteils 6 erfolgt unter plastischer Verformung der Wellenbereiche 14, während Spannungen zwischen dem Lager 1 und dem gelagerten, d.h. positionierten Bauteil 6 aufgrund thermischer Ausdehnungen dann über eine elastische Verformung der Wellenbereiche 14 ausgeglichen bzw. verhindert werden können.

Fign. 6d bis 6f zeigen weitere Ausführungsformen des Lagers 1 mit einer verformbaren Lagerschicht 4.
Bei dem in **Fig. 6d** gezeigten Lager 1 ist die Lagerschicht 4 durch mehrere gewellte Metallstreifen **15** gebildet, die jeweils mit ihrer breiten Seite im Wesentlichen parallel zur Grundfläche 3 verlaufen und deren gewellten Außenseiten die nicht durchgängige Auflagefläche 5 ausbilden. Dabei sind seitlich benachbarte Metallstreifen 15 in Längsrichtung jeweils zueinander versetzt angeordnet.
Bei dem in **Fig. 6e** gezeigten Lager 1 ist die Lagerschicht 4 durch ein oder mehrere Draht- oder Streifenknäueln (Metalldrahtwolle) **16** aus Metall gebildet, deren Knäueloberfläche die nicht durchgängige Auflagefläche 5 ausbildet.
Bei dem in **Fig. 6f** gezeigten Lager 1 ist die Lagerschicht 4 durch ein Metallgranulat **17** gebildet, dessen Granulataußenseite die nicht durchgängige Auflagefläche 5 ausbildet. Das Granulat 17 kann auf dem Grundkörper 2 entweder lose aufliegen oder darauf befestigt, z.B. angeklebt sein.
Auch bei diesen weiteren Ausführungsformen wird bei der Montage das zu lagernde Bauteil 6 in die Lagerschicht 4 gepresst, die sich wegen der hohen Punktlast plastisch verformt und sich mit ihrer Auflagefläche 5 an das aufliegende Bauteil 6 anschmiegt. Dadurch wird ein mechanischer Spaltausgleich zum aufliegenden Bauteil 6 hergestellt und ein großflächiger Wärmekontakt zur Grundfläche 3 bzw. zum Grundkörper 2 ermöglicht. Spannungen zwischen dem Lager 1 und dem gelagerten, d.h. positionierten Bauteil 6 aufgrund thermischer Ausdehnungen können dann über eine elastische Verformung der Lagerschicht 4 ausgeglichen bzw. verhindert werden.

## Patentansprüche

1. Lagervorrichtung (1) für temperaturbeaufschlagte optische Bauteile (6), mit einer verformbaren Lagerschicht (4) aus Metall, die ausgebildet ist, sich durch plastische Verformung an ein aufliegendes Bauteil (6) anzuschmiegen, **dadurch gekennzeichnet,**
**dass** die verformbare Lagerschicht (4) durch ein oder mehrere verformbare Auflageelemente (8; 10; 11; 12; 13; 15; 16; 17) aus einem Metall mit höherem Schmelzpunkt als Indium gebildet ist, wobei das bzw. die Auflageelemente (8; 10; 11; 12; 13, 15; 16; 17) zumindest vor der erstmaligen Auflage eines Bauteils (6) eine in einer oder mehreren Richtungen nicht durchgängige Auflagefläche (5) für das Bauteil (6) ausbilden, und dass das bzw. die verformbaren Auflageelemente (8; 10; 11; 12; 13; 15; 16; 17) als Draht-, Band-, Streifen- oder Wellenfolienmaterial oder als Draht- oder Streifenknäueln oder Granulat ausgebildet sind.

2. Lagervorrichtung nach Anspruch 1, **dadurch gekennzeichnet, dass** das bzw. die verformbaren Auflageelemente (8; 10; 11; 12; 13; 15; 16; 17) jeweils aus Gold, Silber, Kupfer oder Aluminium sind.

3. Lagervorrichtung nach Anspruch 1 oder 2, **dadurch gekennzeichnet, dass** das bzw. die verformbaren Auflageelemente (8; 10; 11; 12; 13; 15; 16; 17) an einem Grundkörper (2) aus einem wärmeleitenden Material, insbesondere aus Metall, thermisch leitend, befestigt sind.

4. Lagervorrichtung nach Anspruch 3, **dadurch gekennzeichnet, dass** zumindest vor der erstmaligen Auflage des Bauteils (6) das bzw. die verformbaren Auflageelemente (8; 10; 11; 12; 13; 15; 16; 17) höchstens ca. 1 mm, bevorzugt höchstens ca. 0,1 mm, über den Grundkörper (2) überstehen.

5. Lagervorrichtung nach einem der vorhergehenden Ansprüche, **dadurch gekennzeichnet, dass** das Drahtmaterial (8; 10; 11) bzw. das mit seiner breiten Seite im Wesentlichen parallel zur Auflagefläche (5) verlaufende Bandmaterial (15) bzw. das mit seiner breiten Seite im Wesentlichen rechtwinklig zur Auflagefläche (5) verlaufende Streifenmaterial (12) bzw. das Wellenfolienmaterial (13) zu einer oder mehreren Wellenbahnen oder Schlaufenbahnen geformt ist.

6. Lagervorrichtung nach einem der vorhergehenden Ansprüche, **dadurch gekennzeichnet, dass** bei mehreren in einer Ebene angeordneten Bahnen von verformbaren Auflageelementen (8; 10; 11; 12; 13; 15) diese parallel, ggf. parallel versetzt, verlaufen, oder dass bei mehreren in unterschiedlichen Ebenen angeordneten Bahnen von verformbaren Auflageelementen (8) diese in einem Windel zueinander versetzt übereinander oder alternierend in Form eines Geflechts ausgebildet sind.

7. Lagervorrichtung nach einem der vorhergehenden Ansprüche, **dadurch gekennzeichnet, dass** die Auflageelemente (10; 11; 12) durch sich im Wesentlichen rechtwinklig zur Auflagefläche (5) erstreckende Drähte gebildet sind.

8. Lagervorrichtung nach einem der vorhergehenden Ansprüche, **dadurch gekennzeichnet, dass** das Drahtmaterial (10, 11), insbesondere Bonddrähte mit einer Dicke zwischen ca. 10 µm und ca. 100 µm, an einer Grundfläche (3) des Lagers (1) befestigt, insbesondere gebondet ist.

9. Lagervorrichtung nach einem der vorhergehenden Ansprüche, **dadurch gekennzeichnet, dass** zumindest vor der erstmaligen Auflage des Bauteils (6) die Auflageelemente (8; 10; 11; 12; 13; 15; 16; 17) in einem Abstand bis ca. 1 mm angeordnet sind.

## Claims

1. Mount (1) for optical components (6) subjected to increased temperatures, having a deformable mounting layer (4) made of metal, which is designed to nestle against a component (6) resting thereon by means of plastic deformation,
**characterized in that**
the deformable mounting layer (4) is formed by one or more deformable supporting elements (8; 10; 11; 12; 13; 15; 16; 17) made of a metal with a higher melting point than indium, the supporting element or elements (8; 10; 11; 12; 13; 15; 16; 17), at least before a component (6) is supported for the first time, forming one or more supporting surfaces (5) for the components (6), and **in that** the deformable supporting element or elements (8; 10; 11; 12; 13; 15; 16; 17) are formed as wire, band, strip or corrugated thin sheet material or as wire or strip clusters or granules.

2. Mount according to Claim 1, **characterized in that** the deformable supporting element or elements (8; 10; 11; 12; 13; 15; 16; 17) are in each case made of gold, silver, copper or aluminium.

3. Mount according to Claim 1 or 2, **characterized in that** the deformable supporting element or elements (8; 10; 11; 12; 13; 15; 16; 17) are fixed in a heat-conducting manner to a base (2) made of a heat-conducting material, in particular of metal.

4. Mount according to Claim 3, **characterized in that**, at least before a component (6) is supported for the first time, the deformable supporting element or elements (8; 10; 11; 12; 13; 15: 18: 17) project by at most about 1 mm, preferably at most about 0.1 mm, above the base (2).

5. Mount according to one of the preceding claims, **characterized in that** the wire material (8; 10; 11), or the band material (15) running with its wide side substantially parallel to the supporting surface (5), or the strip material (12) running with its wide side substantially at right angles to the supporting surface (5), or the corrugated thin sheet material (13), is shaped into one or more wavy or looped strands.

6. Mount according to one of the preceding claims, **characterized in that** in the case of a plurality of strands of deformable supporting elements (8; 10; 11; 12; 13; 15; 16; 17) arranged in a plane, these run in parallel, possibly offset in parallel, or **in that** in the case of a plurality of strands of deformable supporting elements (8) arranged in different planes, these are formed over one another, offset at an angle to one another, or alternately in the form of a network.

7. Mount according to one of the preceding claims, **characterized in that** the supporting elements (10; 11; 12) are formed by wires extending substantially at right angles to the supporting surface (5).

8. Mount according to one of the preceding claims, **characterized in that** the wire material (10, 11), in particular bonding wires with a thickness between about 10 µm and about 100 µm, is fixed to a base surface (3) of the mount (1), in particular bonded.

9. Mount according to one of the preceding claims, **characterized in that**, at least before the component (6) is supported for the first time, the supporting elements (8; 10; 11; 12; 13; 15; 16; 17) are arranged with a spacing of up to about 1 mm.

## Revendications

1. Dispositif de support (1) pour des composants optiques (6) exposés à la température, avec une couche de support déformable (4) qui est conçue pour épouser par déformation plastique la forme d'un composant (6) posé dessus, **caractérisé en ce**
**que** la couche de support déformable (4) est formée par un ou plusieurs éléments d'appui déformables (8 ; 10 ; 11 ; 12 ; 13 ; 15 ; 16 ; 17) composés d'un métal possédant un point de fusion plus élevé que l'indium, le ou les éléments d'appui (8 ; 10 ; 11 ; 12 ; 13 ; 15 ; 16 ; 17) formant, au moins avant le premier appui d'un composant (6), une surface d'appui (5) non continue dans une ou plusieurs directions pour le composant (6), et que le ou les éléments d'appui déformables (8 ; 10 ; 11 ; 12 ; 13 ; 15 ; 16 ; 17) sont réalisés sous la forme d'un matériau en fil, ruban, bande ou feuille ondulée, sous la forme de pelotes de fil ou de bande, ou sous la forme de granulés.

2. Dispositif de support selon la revendication 1, **caractérisé en ce que** le ou les éléments d'appui déformables (8 ; 10 ; 11 ; 12 ; 13 ; 15 ; 16 ; 17) sont chacun en or, argent, cuivre ou aluminium.

3. Dispositif de support selon la revendication 1 ou 2, **caractérisé en ce que** le ou les éléments d'appui déformables (8 ; 10 ; 11 ; 12 ; 13 ; 15 ; 16 ; 17) sont fixés de manière thermoconductrice sur un corps de base (2) en matériau conducteur de la chaleur, en particulier en métal.

4. Dispositif de support selon la revendication 3, **caractérisé en ce qu'**au moins avant le premier appui du composant (6), le ou les éléments d'appui déformables (8 ; 10 ; 11 ; 12 ; 13 ; 15 ; 16 ; 17) font saillie au maximum d'environ 1 mm, de préférence au maximum d'environ 0,1 mm, du corps de base (2).

5. Dispositif de support selon une des revendications précédentes, **caractérisé en ce que** le matériau en fil (8 ; 10 ; 11) ou le matériau en ruban (15) s'étendant sensiblement parallèlement à la surface d'appui (5) par son côté large ou le matériau en bande (12) s'étendant sensiblement perpendiculairement à la surface d'appui (5) par son côté large ou le matériau en feuille ondulée (13) est formé en une ou plusieurs voies ondulées ou bouclées.

6. Dispositif de support selon une des revendications précédentes, **caractérisé en ce que** dans le cas de plusieurs voies d'éléments d'appui déformables (8 ; 10 ; 11 ; 12 ; 13 ; 15) disposées dans un plan, celles-ci s'étendent parallèlement, le cas échéant en parallèlement en décalage, ou que dans le cas de plusieurs voies d'éléments d'appui déformables (8) disposées dans des plans différents, celles-ci sont réalisées sous la forme d'une tresse par superposition ou alternance avec un décalage angulaire mutuel.

7. Dispositif de support selon une des revendications précédentes, **caractérisé en ce que** les éléments d'appui (10 ; 11 ; 12) sont formé par des fils qui s'étendent sensiblement perpendiculairement à la surface d'appui (5).

8. Dispositif de support selon une des revendications précédentes, **caractérisé en ce que** le matériau en fil (10, 11), en particulier des fils de connexion d'une épaisseur comprise entre environ 10 µm et environ 100 µm, sont fixés, en particulier soudés, sur une surface de base (3) du support (1).

9. Dispositif de support selon une des revendications précédentes, **caractérisé en ce qu'**au moins avant le premier appui du composant (6), les éléments d'appui (8 ; 10 ; 11 ; 12 ; 13 ; 15 ; 16 ; 17) sont disposés à un intervalle allant jusqu'à environ 1 mm.
